# EUROPÄISCHE PATENTSCHRIFT

(11) **EP 3 472 584 B1**
(45) Veröffentlichungstag und Bekanntmachung des Hinweises auf die Patenterteilung: **28.07.2021**
(21) Anmeldenummer: 17725964.5
(22) Anmeldetag: 29.05.2017
(51) Int. Cl.: G01L 1/04, G01L 1/26

(54) **VORRICHTUNG ZUR KRAFTMESSUNG EINER ELASTISCHEN LAGERUNG**
DEVICE FOR FORCE MEASUREMENT IN AN ELASTIC BEARING
DISPOSITIF DE MESURE DE FORCE DANS UN SUPPORT ÉLASTIQUE

(30) Priorität: 20.06.2016 DE 102016210967; 04.10.2016 DE 102016219194
(43) Veröffentlichungstag der Anmeldung: 24.04.2019
(73) Patentinhaber: ContiTech Vibration Control GmbH, 30165 Hannover (DE)
(72) Erfinder: NARBERHAUS, Stefan, 30826 Garbsen (DE); GARBERS, Norbert, 21521 Dassendorf (DE); KOSOV, Oleksandr, 30855 Langenhagen (DE); ALBERTYN, Alexander, 30826 Garbsen (DE)
(74) Vertreter: Continental Corporation
(86) Internationale Anmeldenummer: PCT/EP2017/062819
(87) Internationale Veröffentlichungsnummer: WO 2017/220284

(56) Entgegenhaltungen:
- DE-A1-102014 213 724
- US-A- 4 517 848
- US-A1- 2015 051 600
- US-B1- 6 170 622

## Beschreibung

Die vorliegende Erfindung betrifft eine Vorrichtung zur Kraftmessung einer elastischen Lagerung gemäß des Patentanspruchs 1.

Es ist der Einbau von Wägezellen und Kraftmessdosen zur Messung von Kräften am Ort der elastischen Lagerung bekannt. Diese Sensoren werden zusätzlich zur elastischen Lagerung z.B. parallel oder in Reihe zum zu erfassenden Kraftfluss angeordnet. Derartige übliche am Markt erhältliche Sensoren basieren auf DMS-Sensorik (Dehnungsmessstreifen) oder auf Piezo-Sensorik, z.T. mit integrierten Verstärkern. Beispielweise können Biegebalken verwendet werden, auf denen DMS-Sensorelemente aufgeklebt sind. Alternativ können z.B. bei Luftfedern Luftdruckmessungen innerhalb der Luftfeder erfolgen.

Nachteilig ist hierbei, dass jeweils ein zusätzliches Bauteil erforderlich ist, welches integriert werden muss. Dies kann zu zusätzlichen Kosten führen sowie zusätzlichen Bauraum erfordern. Ferner kann der Sensor zusätzlich vor äußeren Einflüssen zu schützen sein.

Nachteilig ist weiterhin bei der Verwendung von DMS-Sensorelementen, dass diese lediglich Verformungen, Spannungen bzw. Biegungen in einer einzigen Raumrichtung erfassen können. Dies kann zu fehlerhaften Messungen führen, falls zumindest Kraftanteile in einer anderen Raumrichtung auftreten. Diesen Nachteil durch eine Mehrzahl von DMS-Sensorelementen zu beheben kann den Aufwand und die Kosten sowohl der DMS-Sensorelemente selbst als auch der Elektronik zur Auswertung und Umrechnung der Spannungswerte erhöhen und damit ebenfalls verteuern.

Nachteilig bei der Luftdruckmessung in Luftfedern kann sein, dass Luft kompressibel ist und somit der erfasste Druckwert geringer als die tatsächlich ausgeübte Kraft sein kann.

Eine Aufgabe der vorliegenden Erfindung ist es, ein Kraftmessung am Ort einer elastischen Lagerung der eingangs beschriebenen Art einfacher und bzw. oder günstiger als bisher bekannt durchführen zu können. Insbesondere soll auf zusätzliche Bauteile verzichtet werden können.

Die Aufgabe wird erfindungsgemäß durch eine Vorrichtung zur Kraftmessung einer elastischen Lagerung mit den Merkmalen gemäß Anspruch 1 gelöst. Vorteilhafte Weiterbildungen sind in den Unteransprüchen beschrieben.

Die vorliegende Erfindung betrifft somit eine Vorrichtung zur Kraftmessung einer elastischen Lagerung mit einer elastischen Lagerung, insbesondere mit einer Schichtfeder, mit wenigstens einem Federelement, und mit wenigstens einem Anbindungselement, gegen welches das Federelement eine Kraft ausüben kann.

Die erfindungsgemäße Vorrichtung zur Kraftmessung weist eine elastische Lagerung mit wenigstens einem Sensor auf, welcher in das Anbindungselement derart integriert ist, dass der Sensor die Kraft, welche vom Federelement auf das Anbindungselement ausgeübt werden kann, direkt oder indirekt erfassen kann.

Somit wird die Kraftmessung in der elastischen Lagerung integriert. Auf diese Weise werden zusätzlich zur elastischen Lagerung keine weiteren zu integrierenden Bauteile benötigt. Die elastische Lagerung kann dabei als ebenes Lagerelement wie z.B. als Schichtfeder ausgeführt sein. Die elastische Lagerung kann jedoch auch gekrümmte Flächen aufweisen, zwischen denen die Kraftmessung erfindungsgemäß erfolgen kann.

Vorteilhaft ist hierbei, dass der Nutzer mit einem Bauteil die auf dieses Bauteil wirkenden Kräfte bestimmen kann. Dies kann z.B. zur Ladungskontrolle, d.h. zur Bestimmung einer Beladung eines Fahrzeugs, sowie in Kombination mit der Messung der Einfederung zur Alterungsbestimmung für die Wartung verwendet werden. Ferner kann die Bestimmung der Steifigkeit für eine bessere Fertigungskontrolle zur Erhöhung der Produktqualität sorgen.

Erfindungsgemäß ist der Sensor ein Drucksensor, welcher durch das Anbindungselement hindurch in Richtung zum Federelement hin angeordnet ist, wobei der Drucksensor eine Sensormembran aufweist, welche in direktem Kontakt mit dem Federelement steht. Diese Umsetzung kann sehr einfach und kompakt sein. Auch kann der Druck direkt in einer Vorzugsrichtung erfasst werden, welche vorzugsweise einer Haupteinfederungsrichtung der elastischen Lagerung entsprechen kann.

Erfindungsgemäß ist der Sensor ein Drucksensor, welcher in direktem Kontakt mit einem Fluid steht, wobei das Fluid in direktem oder in indirektem Kontakt mit dem Federelement steht. Auf diese Weise kann das Fluid zur Übertragung des Drucks bzw. der Kraft, welche vom Federelement auf das Anbindungselement ausgeübt werden kann, genutzt werden. Vorzugsweise ist hierzu ein möglichst inkompressibles Fluid zu verwenden, wobei es ein allgemeiner Vorteil von Fluiden gegenüber Gasen ist, vergleichsweise inkompressibel zu sein. Hierdurch kann eine möglichst verlustfreie Druck- bzw. Kraftübertragung erfolgen.

Vorteilhaft ist hierbei, dass der Drucksensor von der elastischen Lagerung beabstandet angeordnet werden und dennoch zur Druck- bzw. Krafterfassung verwendet werden kann. Dies kann eine flexiblere Anordnung des Drucksensors erlauben. Ferner kann das Anbindungselement kompakter aufgebaut werden.

Vorteilhaft ist insbesondere, dass Drucksensoren zur Erfassung eines Drucks eines Fluids sehr viel günstiger sein können als Drucksensoren zur Erfassung eines Drucks bzw. einer Kraft von einem Festkörper. Hierdurch können die Kosten für die Umsetzung der vorliegenden Erfindung signifikant reduziert werden, was die Anwendung der Erfindung in Produkten fördern kann.

Vorteilhaft ist weiterhin, dass hierdurch eine Druckmessung zwischen gekrümmten Flächen einfach und bzw. oder verlässlich erfolgen kann.

Erfindungsgemäß steht der Drucksensor über wenigstens einen Fluidkanal, welcher ausgebildet ist, das Fluid zu führen, in indirektem Kontakt mit dem Federelement. Auf diese Weise kann über den Fluidkanal ein indirekter Kontakt zwischen dem Drucksensor bzw. dessen Fluidsensorelement und dem Federelement realisiert werden.

Gemäß einem weiteren Aspekt der vorliegenden Erfindung weist der Fluidkanal wenigstens ein Entlüftungselement auf, welches ausgebildet ist, den Fluidkanal nach außen zu entlüften. Auf diese Weise kann erreicht werden, dass der Fluidkanal möglichst vollständig mit einem Fluid gefüllt und Gas aus dem Fluidkanal entfernt werden kann. Hierdurch kann erreicht werden, dass die Druck- bzw. Kraftübertragung über den Fluidkanal möglichst ausschließlich über das Fluid erfolgen kann, so dass eine möglichst inkompressible und verlustfreie Druck- bzw. Kraftübertragung erreicht werden kann. Gemäß einem weiteren Aspekt der vorliegenden Erfindung ist der Fluidkanal zumindest im Wesentlichen in einer Ebene ausgebildet, welche senkrecht zu einer Haupteinfederungsrichtung der elastischen Lagerung ausgerichtet ist. Auf diese Weise kann eine möglichst flächige Druckerfassung erfolgen, so dass z.B. Verkippungen etc. ausgeglichen werden können. Mit anderen Worten kann der Druck bzw. die Kraft zumindest hinsichtlich ihres maximalen Wertes auch bei Kräften erfolgen, welche abweichend von der Haupteinfederungsrichtung der elastischen Lagerung eingeleitet werden. Dies kann zu besseren Messergebnissen führen.

Gemäß einem weiteren Aspekt der vorliegenden Erfindung ist der Fluidkanal zumindest im Wesentlichen um eine Längsachse, welche einer Haupteinfederungsrichtung der elastischen Lagerung entspricht, herum, insbesondere kreisförmig herum, ausgebildet. Auch auf diese Weise können Verkippungen alternativ oder zusätzlich ausgeglichen werden.

Gemäß einem weiteren Aspekt der vorliegenden Erfindung steht der Fluidkanal über wenigstens eine elastische Fluidkanalabdeckung in indirektem Kontakt mit dem Federelement. Auf diese Weise kann eine Druck- bzw. Kraftübertragung mittels eines Fluids erfolgen und das Fluid gleichzeitig von einem Kontakt mit dem Federelement ferngehalten werden. Hierdurch kann beispielsweise der Fluidkanal während der Herstellung vor dem Eindringen von Verschmutzungen durch die elastische Fluidkanalabdeckung geschützt werden.

Gemäß einem weiteren Aspekt der vorliegenden Erfindung ist der Drucksensor in dem Anbindungselement angeordnet. Hierdurch kann der Drucksensor vergleichsweise nah an dem Ort der Kraft- bzw. Druckentstehung angeordnet werden, aber gleichzeitig kann eine gewisse Flexibilität bei der Umsetzung der vorliegenden Erfindung geschaffen werden.

Mehrere Ausführungsbeispiele der vorliegenden Erfindung werden nachstehend im Zusammenhang mit den folgenden Figuren erläutert. Darin zeigt:
- Fig. 1: eine perspektivische schematische Darstellung einer elastischen Lagerung mit Sensor gemäß eines ersten Beispiels, welches nicht in den Schutzbereich der Ansprüche fällt,
- Fig. 2a: eine perspektivische schematische Darstellung eines Sensors zur Verwendung des ersten Beispiels,
- Fig. 2b: einen Ausschnitt der Fig. 1;
- Fig. 3a: eine perspektivische schematische Darstellung des ersten Beispiels von oben ohne Sensor;
- Fig. 3b: eine schematische Schnittdarstellung der Fig. 3a;
- Fig. 4a: eine perspektivische schematische zweiten Beispiels, welches nicht in den Schutzbereich der Ansprüche fällt, von oben ohne Sensor;
- Fig. 4b: eine schematische Schnittdarstellung der Fig. 4a;
- Fig. 5a: eine perspektivische schematische Darstellung eines dritten Beispiels, welches nicht in den Schutzbereich der Ansprüche fällt, von unten ohne Sensor;
- Fig. 5b: eine perspektivische schematische Darstellung des dritten Beispiels von oben;
- Fig. 5c: eine schematische Schnittdarstellung der Fig. 5a;
- Fig. 6a: eine perspektivische schematische Darstellung eines Sensors zur Verwendung bei einem ersten Ausführungsbeispiel;
- Fig. 6b: eine schematische Schnittdarstellung des ersten Ausführungsbeispiels;
- Fig. 7a: eine perspektivische schematische Darstellung eines oberen Anbindungselements von unten zur Verwendung bei einem zweiten Ausführungsbeispiel;
- Fig. 7b: eine schematische Schnittdarstellung des zweiten Ausführungsbeispiels;
- Fig. 8a: eine perspektivische schematische Darstellung einer elastischen Lagerung gemäß einem dritten Ausführungsbeispiel; und
- Fig. 8b: die Darstellung der Fig. 8a von schräg unten.

### 1. Direkte Messung über Druck

Der Gummi 20 verhält sich wie eine hydraulische Flüssigkeit. Dieser Druck wird auf den Sensor 30 übertragen. Die Druckänderung am Sensor 30 ist proportional zur Kraft, welche auf die elastische Lagerung 2 wirkt.

Der Sensor 30 kann vor oder nach der Vulkanisation angebracht werden.

Dies geschieht mittels handelsüblicher Sensorbauteile oder speziell für diesen Anwendungsfall entwickelter Bauteile. Die Messungen können mit unterschiedlichsten physikalischen Verfahren wie z.B. Dehnungen (DMS), Ladung (Piezo), Magnetfeld (Hall - Magnetsensor) etc. erfolgen.

### 2. Direkte Messung über Höhenänderung des Bauteils

Die Gummifeder 20 erfährt aufgrund der äußeren Lasten eine Längenänderung. Diese Längenänderung wird mittels Ultraschallsensoren 30 ermittelt und über die Federsteifigkeit in die äußere Last umgerechnet.

Die Betriebsspannung für die (Vor-)Verstärkung kann ggf. mittels Energie-Harvest erzeugt werden.

Der benötigte (Vor-)Verstärker kann ggf. in das Metallteil 10 integriert werden.

In speziellen Anwendungsfällen muss mehr als ein Sensor 30 in die Metallplatte 10 appliziert werden. Die Drücke werden dann über eine Reihenschaltung summiert.

### 3. Indirekte Messung über Druckänderungen eines Fluids

Erfindungsgemäß befindet sich ein Fluid zwischen dem Federelement 20 und dem Sensor 30, so dass der Druck des Federelements 20 auf das Fluid drückt, welches möglichst inkompressibel ist. Daher kann der Druck möglichst verlustfrei über das Fluid an den Sensor 30 übertragen werden.

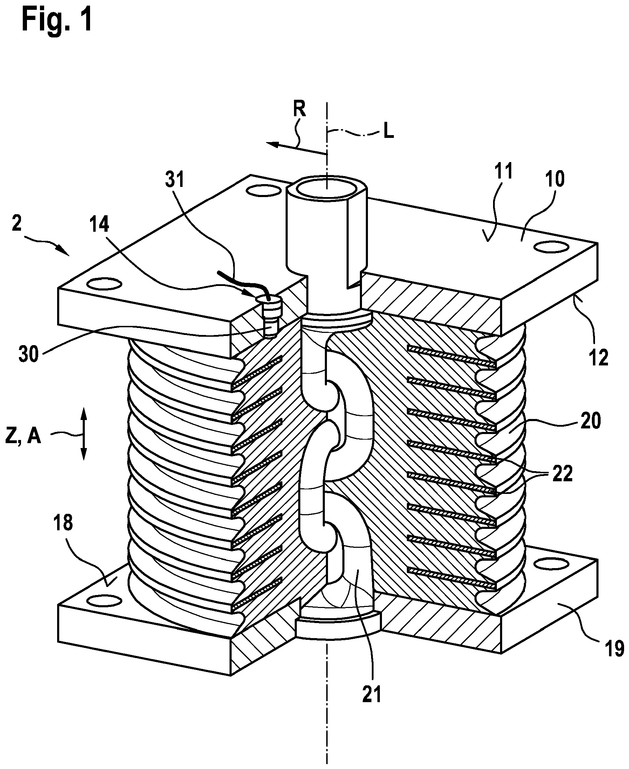

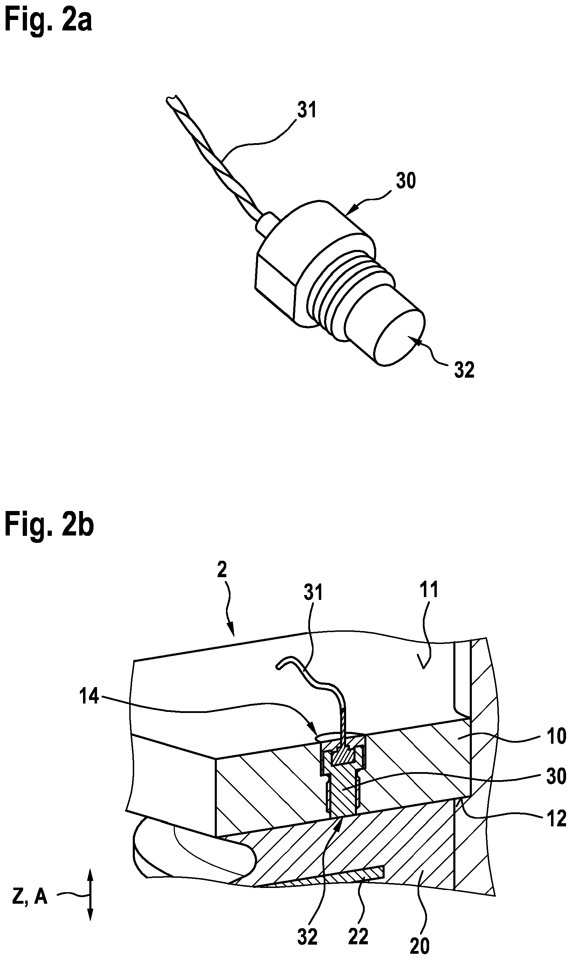

Fig. 1 zeigt eine perspektivische schematische Darstellung einer elastischen Lagerung 2 mit Sensor 30 gemäß eines ersten Beispiels. Fig. 2a zeigt eine perspektivische schematische Darstellung eines Sensors 30 zur Verwendung bei dem ersten Beispiel. Fig. 2b zeigt einen Ausschnitt der Fig. 1.

Die elastische Lagerung 2 ist in diesem Beispiel eine Schichtfeder 2, die im Wesentlichen aus einem Federelement 20 aus einem elastomeren Material 20 besteht, welches auch als Gummifeder 20 bezeichnet werden kann. Innerhalb des Materials des Federelements 20 ist ein metallisches Kettenelement 21 angeordnet, welches in einer Längsrichtung L ausgerichtet ist, welche der Höhe Z entspricht. Die Höhe Z stellt auch die Dicke Z der Schichtfeder 2 dar. Senkrecht zur Höhe Z ist die radiale Richtung R angeordnet. In Umfangsrichtung um die Längsachse L herum sind in der Höhe Z zueinander beabstandet Metallringe 22 in dem Material des Federelements 20 eingebettet.

Das Federelement 20 ist in der Höhe Z zwischen einem ersten, oberen Anbindungselement 10 in Form einer oberen, ersten Metallplatte 10 und zwischen einem zweiten, unteren Anbindungselement 19 in Form einer unteren, zweiten Metallplatte 19 angeordnet. Zwischen den beiden Metallplatten 10, 19 kann das Federelement 20 im Wesentlichen in einer Haupteinfederungsrichtung A, welche der Höhe Z entspricht, federnd wirken. Dabei ist das Federelement 20 durch Vulkanisation mit einer Unterseite 12 des oberen Anbindungselements 10 und mit einer Oberseite 18 des unteren Anbindungselements 19 verbunden.

In dem ersten Beispiel ist ein Sensor 30 als Drucksensor 30, siehe z.B. Figur 2a, in dem oberen Anbindungselement 10 integriert. Der Drucksensor 30 ist in einer entsprechenden Sensoraufnahme 14 in Form einer Bohrung 14 angeordnet, welche als Stufenbohrung von der Oberseite 11 des ersten Aussparungselements 10 ausgehend und mit einem Gewinde im unteren Bereich vorgesehen ist. Ein Sensorkabel 31 führt von dem oberen Anbindungselement 10 nach außen weg.

Dabei ist der Drucksensor 30 mit einer frontseitigen Sensormembran 32 zum Federelement 20 hin ausgerichtet und berührt dieses. Auf diese Weise kann der Druck, welcher von dem Federelement 20 auf die Unterseite 12 des oberen Anbindungselements 10 ausgeübt werden kann, von dem Drucksensor 30 über dessen frontseitige Sensormembran 32 erfasst werden.

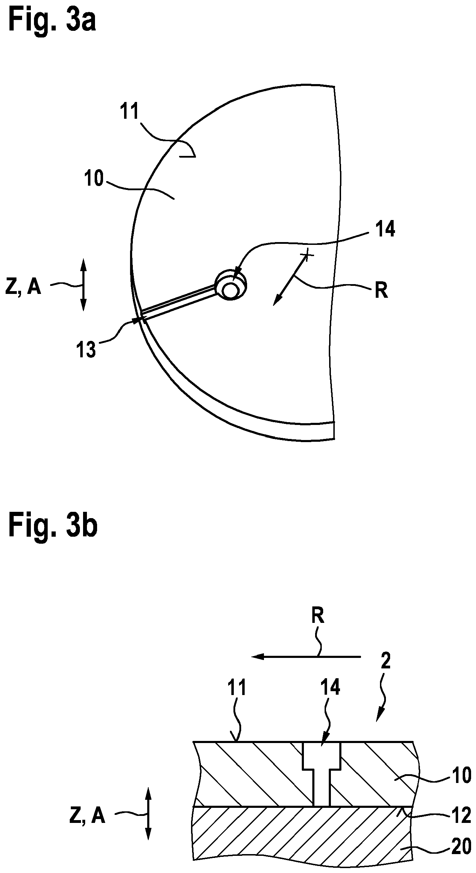

Fig. 3a und Fig. 3b zeigt eine Komplettierung der Sensoranordnung 30 nach der Vulkanisation für einen Drucksensor 30. Die obere Stahlplatte 10 weist eine Aussparung 13 mit einer Tiefe von 0,5 mm in der Höhe Z auf. Die Aussparung 13 dient der Aufnahme des Kabels 31 des Sensors 30. Eine Bohrung 14 dient der Befestigung des Sensors 30. Die Befestigung des Sensors 30 erfolgt nach der Vulkanisation. Das Gummi 20 wird eingespritzt und vulkanisiert.

Vorteilhaft ist hierbei, dass der Innendruck bei der Produktion ggf. gemessen werden kann.

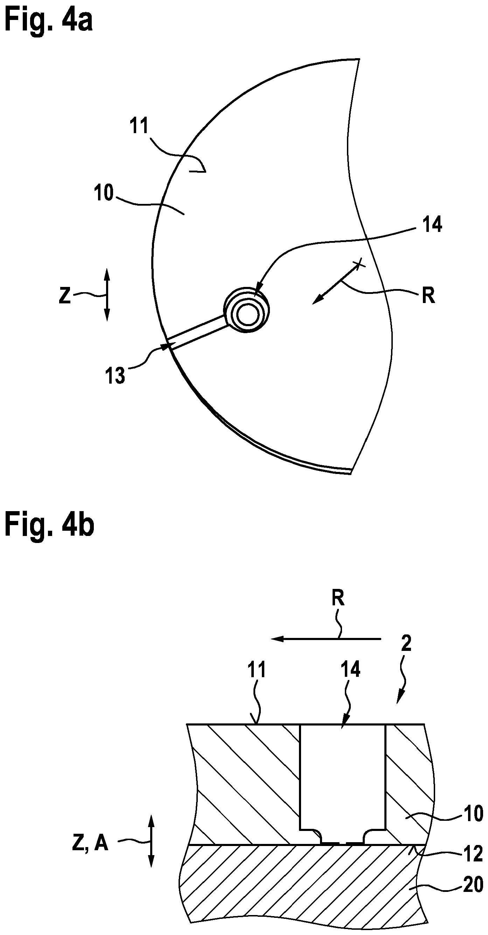

Fig. 4a und Fig. 4b zeigt eine Komplettierung der Sensoranordnung 30 nach der Vulkanisation für einen Höhenänderungssensor 30. Die obere Stahlplatte 10 weist eine Aussparung 13 mit einer Tiefe von 0,5 mm in der Höhe Z auf. Die Aussparung 13 dient der Aufnahme des Kabels 31 des Sensors 30. Eine Bohrung 14 dient der Befestigung des Sensors 30. Es wird eine Membran hergestellt. Der Sensor 30 wird in der Membran und bzw. oder auf der Membran befestigt. Das Gummi 20 wird eingespritzt und vulkanisiert.

Vorteilhaft ist hierbei, dass der Einspritzvorgang und die Vulkanisation ohne Einschränkungen erfolgen können.

Die Darstellungen der Fig. 4a und Fig. 4b zeigen auch eine Komplettierung der Sensoranordnung 30 vor der Vulkanisation für einen Höhenänderungssensor 30.

Vorteilhaft ist hierbei, dass der Einspritzdruck bei der Produktion gemessen werden kann. Ggfs. kann auch eine Temperaturmessung erfolgen.

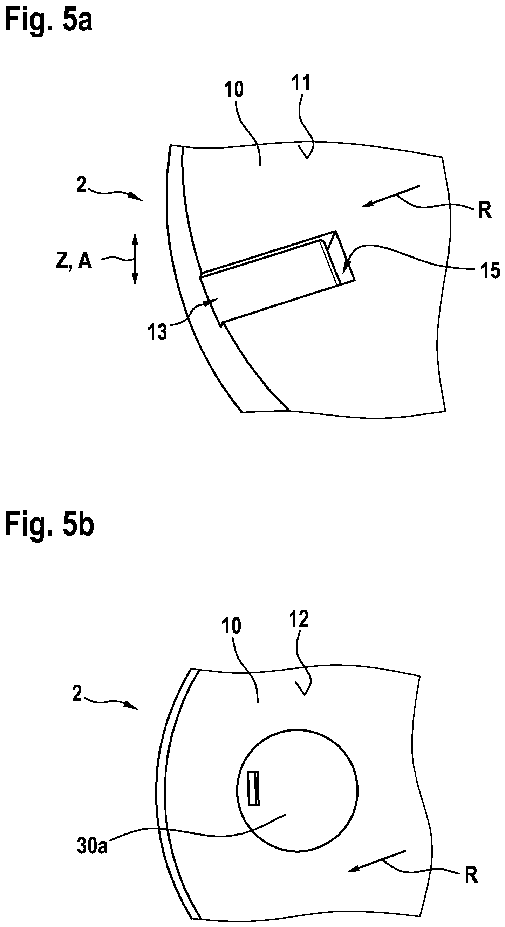

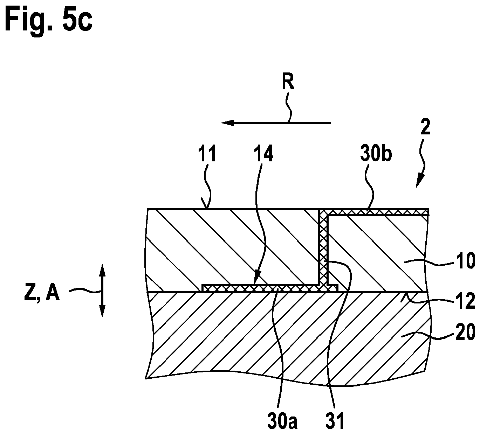

Fig. 5a und Fig. 5b zeigt eine Komplettierung der Sensoranordnung 30 vor der Vulkanisation für einen Foliensensor 30. Die obere Stahlplatte 10 weist eine Aussparung 13 mit einer Tiefe von 0,5 mm in der Höhe Z auf. Die Aussparung 13 dient der Aufnahme der Sensorfolie 30a. Zur Aufnahme des Kabels 31 ist eine Durchführung 15 in Form eines Kanals 15 vorgesehen. Die Folie 30a wird mit Kleber befestigt. Die Sensorelektronik 30b ist auf der Oberseite 12 des ersten Anbindungselements 10 in dieses eingelassen angeordnet.

Vorteilhaft ist hierbei, dass der Einspritzdruck bei der Produktion gemessen werden kann. Ggfs. kann auch eine Temperaturmessung erfolgen.

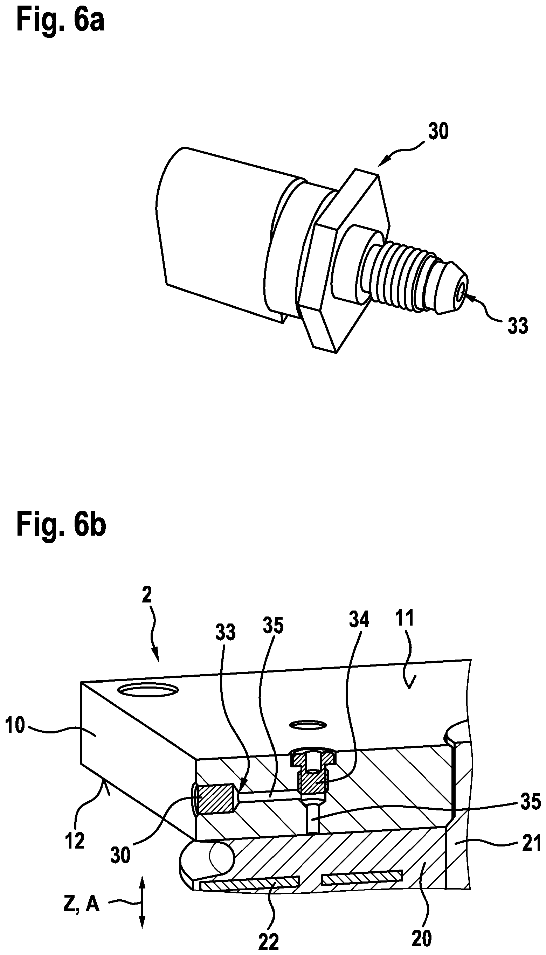

Fig. 6a zeigt eine perspektivische schematische Darstellung eines Sensors 30 zur Verwendung bei einem ersten Ausführungsbeispiel. Fig. 6b zeigt eine schematische Schnittdarstellung des ersten Ausführungsbeispiels. In diesem ersten Ausführungsbeispiel wird als Sensor 30 ein Fluiddrucksensor 30 verwendet. Der Fluiddrucksensor 30 weist an seiner Vorderseite ein Fluidsensorelement 33 auf, vgl. Fig. 6a, welches ausgebildet ist, mit einem Fluid in Kontakt zustehen. Hierzu wird der Fluiddrucksensor 30 seitlich in dem oberen Anbindungselement 10 angeordnet.

Dabei ist die Vorderseite des Fluiddrucksensors 30 über einen Fluidkanal 35 innerhalb des oberen Anbindungselements 10 mit dem Federelement 20 verbunden, so dass Kräfte, welche vom Federelement 20 auf die Unterseite 12 des oberen Anbindungselements 10 ausgeübt werden, auch auf das Fluid innerhalb des Fluidkanals 35 übertragen werden. Auf diese Weise kann eine Druck- bzw. Krafterfassung indirekt über das Fluid erfolgen.

Der Fluidkanal 35 weist ein Entlüftungselement 34 auf, welches der Entlüftung des Fluidkanals 34 nach außen dient, um den Fluidkanal 34 vollständig mit dem Fluid füllen und Lufteinschlüsse, welche eine deutlich größere Kompressibilität als das Fluid aufweisen könnten, zu vermeiden. Der Fluidkanal 35 ist auf diese Weise etwa L-förmig ausgebildet.

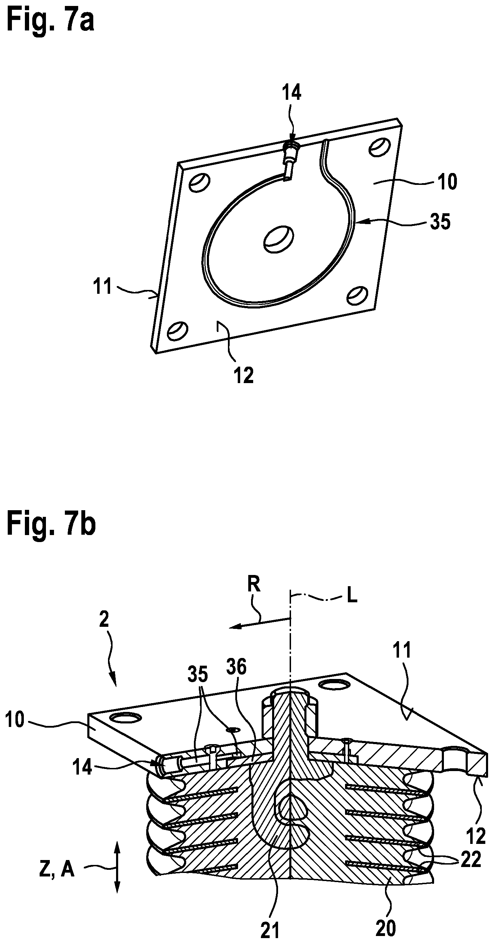

Fig. 7a zeigt eine perspektivische schematische Darstellung eines oberen Anbindungselements 10 von unten zur Verwendung bei einem zweiten Ausführungsbeispiel. Fig. 7b zeigt eine schematische Schnittdarstellung des zweiten Ausführungsbeispiels. Das fünfte Ausführungsbeispiel entspricht grundsätzlich dem zweiten Ausführungsbeispiel der Fig. 6a, 6b, jedoch ist der Fluidkanal 35 in diesem Fall etwa kreisringförmig um die Längsachse L herum ausgebildet. Hierdurch kann der Druck großflächiger erfasst werden, so dass z.B. Verkippungen ausgeglichen werden können. Ferner ist zwischen dem Fluidkanal 35 und dem Federelement 20 eine elastische Fluidkanalabdeckung 36 angeordnet, welche zwar den Fluidkanal 35 gegenüber dem Federelement 20 abdecken und schützen kann, jedoch ausreichend elastisch ausgebildet ist, um den Druck von dem Federelement 20 möglichst verlustfrei auf das Fluid im Fluidkanal 35 übertragen zu können.

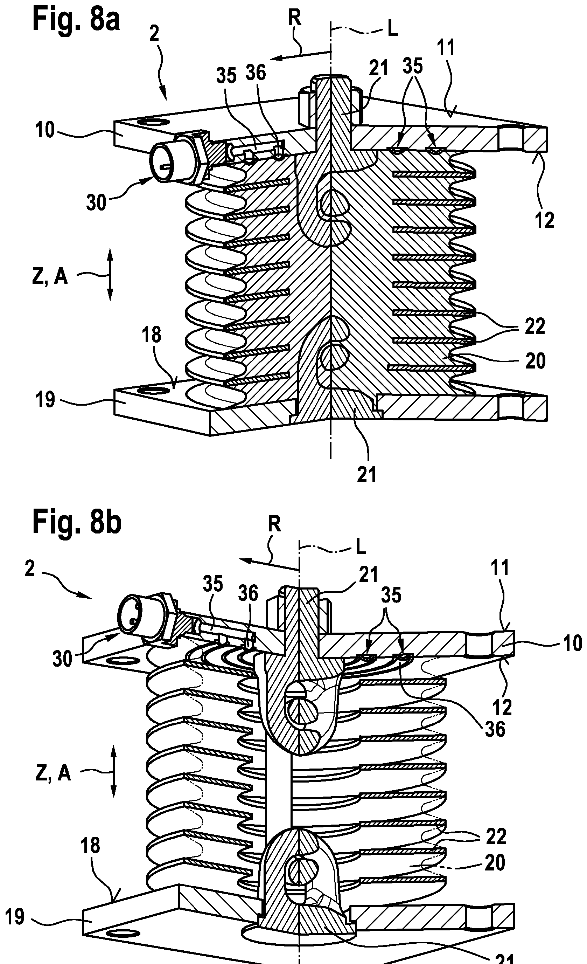

Fig. 8a zeigt eine perspektivische schematische Darstellung einer elastischen Lagerung 2 gemäß einem dritten Ausführungsbeispiel. Fig. 8b zeigt die Darstellung der Fig. 8a von schräg unten. Das dritte Ausführungsbeispiel unterscheidet sich von dem fünften Ausführungsbeispiel der Fig. 6a, 6b dahingehend, da in diesem Fall zwei radial zueinander versetzte Fluidkanäle 35 vorgesehen sind, welche miteinander verbunden sind. Beide Fluidkanäle 35 sind etwa kreisringförmig um die Längsachse L herum ausgebildet. Hierdurch kann eine noch großflächigere Druckerfassung erfolgen.

Ferner sind in diesem Fall die elastischen Fluidkanalabdeckungen 36 nach unten, d.h. von der Unterseite 12 des ersten Anbindungselements 10 weg in das Federelement 20 hinein, gewölbt ausgebildet, so dass der Kontaktbereich zwischen den elastischen Fluidkanalabdeckungen 36 und dem Federelement 20 vergrößert werden kann. Dies kann die Druckübertragung verstärken.

### Bezugszeichenliste (Teil der Beschreibung)

- A: Haupteinfederungsrichtung der elastischen Lagerung 2
- L: Längsachse
- R: radiale Richtung
- Z: Höhe; Dicke

- 10: (oberes) erstes Anbindungselement; erste Metallplatte; Stahlplatte
- 11: Oberseite des ersten Anbindungselements 10
- 12: Unterseite des ersten Anbindungselements 10
- 13: Aussparung
- 14: Sensoraufnahme; Bohrung
- 15: Durchführung
- 18: Oberseite des zweiten Anbindungselements 19
- 19: (unteres) zweites Anbindungselement; zweite Metallplatte

- 2: elastische Lagerung; Schichtfeder
- 20: Federelement; elastomeres Material; Gummifeder
- 21: Kettenelement
- 22: Metallringe

- 30: Sensor; Drucksensor; Fluiddrucksensor
- 30a: Sensorfolie
- 30b: Sensorelektronik
- 31: Sensorkabel
- 32: (frontseitige) Sensormembran
- 33: Fluidsensorelement
- 34: Entlüftungselement
- 35: Fluidkanal
- 36: elastische Fluidkanalabdeckung

## Patentansprüche

1. Vorrichtung zur Kraftmessung einer elastischen Lagerung (2), mit einer elastischen Lagerung (2), insbesondere einer Schichtfeder (2), mit
wenigstens einem Federelement (20), und mit
wenigstens einem Anbindungselement (10), gegen welches das Federelement (20) eine Kraft ausüben kann,
**gekennzeichnet durch** wenigstens einen Sensor (30), welcher in das Anbindungselement (10) derart integriert ist, dass der Sensor (30) die Kraft, welche vom Federelement (20) auf das Anbindungselement (10) ausgeübt werden kann, direkt oder indirekt erfassen kann,
wobei der Sensor (30) ein Drucksensor (30) ist, welcher in direktem Kontakt mit einem Fluid steht,
wobei das Fluid in direktem oder in indirektem Kontakt mit dem Federelement (20) steht und
wobei der Drucksensor (30) über wenigstens einen Fluidkanal (35), welcher ausgebildet ist, das Fluid zu führen, in indirektem Kontakt mit dem Federelement (20) steht.

2. Vorrichtung nach Anspruch 1, **dadurch gekennzeichnet, dass** der Fluidkanal (35) wenigstens ein Entlüftungselement (34) aufweist, welches ausgebildet ist, den Fluidkanal (35) nach außen zu entlüften.

3. Vorrichtung nach Anspruch 1 oder 2, **dadurch gekennzeichnet, dass** der Fluidkanal (35) zumindest im Wesentlichen in einer Ebene ausgebildet ist, welche senkrecht zu einer Haupteinfederungsrichtung (A) der elastischen Lagerung (2) ausgerichtet ist.

4. Vorrichtung nach einem der vorangehenden Ansprüche, **dadurch gekennzeichnet, dass**
der Fluidkanal (35) zumindest im Wesentlichen um eine Längsachse (L), welche einer Haupteinfederungsrichtung (A) der elastischen Lagerung (2) entspricht, herum, insbesondere kreisförmig herum, ausgebildet ist.

5. Vorrichtung nach einem der vorangehenden Ansprüche, **dadurch gekennzeichnet, dass**
der Fluidkanal (35) über wenigstens eine elastische Fluidkanalabdeckung (36) in indirektem Kontakt mit dem Federelement (20) steht.

6. Vorrichtung nach einem der vorangehenden Ansprüche, **dadurch gekennzeichnet, dass**
der Drucksensor (30) in dem Anbindungselement (10) oder an dem Anbindungselement (10) angeordnet ist.

## Claims

1. Device for force measurement in an elastic bearing (2), having an elastic bearing (2), in particular a multilayer spring (2), having at least one spring element (20), and having at least one attachment element (10), against which the spring element (20) can exert a force, **characterized by**
at least one sensor (30), which is integrated in the attachment element (10) in such a way that the sensor (30) can directly or indirectly detect the force which can be exerted by the spring element (20) on the attachment element (10), wherein the sensor (30) is a pressure sensor (30), which is in direct contact with the fluid, wherein the fluid is in direct or indirect contact with the spring element (20) and wherein the pressure sensor (30) is in indirect contact with the spring element (20) via at least one fluid channel (35), which is designed to guide the fluid.

2. Device according to Claim 1, **characterized in that** the fluid channel (35) has at least one venting element (34), which is designed to vent the fluid channel (35) to the outside.

3. Device according to Claim 1 or 2, **characterized in that**
the fluid channel (35) is formed at least substantially in a plane that is aligned perpendicularly to a main direction of compression (A) of the elastic bearing (2).

4. Device according to one of the preceding claims, **characterized in that**
the fluid channel (35) is formed at least substantially around the longitudinal axis (L), which corresponds to a direction of compression (A) of the elastic bearing (2), in particular around in the form of a circle.

5. Device according to one of the preceding claims, **characterized in that**
the channel (35) is in indirect contact with the spring element (20) via at least one elastic fluid channel covering (36).

6. Device according to one of the preceding claims, **characterized in that**
the pressure sensor (30) is arranged in the attachment element (10) or on the attachment element (10).

## Revendications

1. Dispositif de mesure de force d'un support élastique (2), comprenant un support élastique (2), en particulier un ressort multicouche (2), comprenant au moins un élément faisant ressort (20), et
au moins un élément de liaison (10) contre lequel l'élément faisant ressort (20) peut exercer une force, **caractérisé par** au moins un capteur (30) qui est intégré dans l'élément de liaison (10) de telle sorte que le capteur (30) peut détecter directement ou indirectement la force que l'élément faisant ressort (20) peut exercer sur l'élément de liaison (10),
le capteur (30) étant un capteur de pression (30) qui est en contact direct avec un fluide,
le fluide étant en contact direct ou indirect avec l'élément faisant ressort (20), et
le capteur de pression (30) étant en contact indirect avec l'élément faisant ressort (20) par au moins un passage de fluide (35) qui est réalisé pour conduire le fluide.

2. Dispositif selon la revendication 1, **caractérisé en ce que** le passage de fluide (35) présente au moins un élément d'aération (34) qui est réalisé pour aérer le passage de fluide (35) vers l'extérieur.

3. Dispositif selon la revendication 1 ou 2, **caractérisé en ce que** le passage de fluide (35) est réalisé au moins substantiellement dans un plan qui est orienté perpendiculairement à une direction de débattement de ressort principale (A) du support élastique (2).

4. Dispositif selon l'une quelconque des revendications précédentes, **caractérisé en ce que** le passage de fluide (35) est réalisé, en particulier en forme de cercle, au moins substantiellement autour d'un axe longitudinal (L) qui correspond à une direction de débattement de ressort principale (A) du support élastique (2).

5. Dispositif selon l'une quelconque des revendications précédentes, **caractérisé en ce que** le passage de fluide (35) est en contact indirect avec l'élément faisant ressort (20) par au moins un recouvrement de passage fluide élastique (36).

6. Dispositif selon l'une quelconque des revendications précédentes, **caractérisé en ce que** le capteur de pression (30) est disposé dans l'élément de liaison (10) ou sur l'élément de liaison (10).
